# EUROPÄISCHE PATENTANMELDUNG

(11) **EP 0 693 503 A1**
(43) Veröffentlichungstag der Anmeldung: **24.01.1996**
(21) Anmeldenummer: 95110882.8
(22) Anmeldetag: 12.07.1995
(51) Int. Cl.: C08F 20/06, C08F 220/06, C08F 2/44, A47K 3/02, B32B 27/30

(54) **Hinterfütterter Sanitärartikel und Verfahren zu dessen Herstellung**

(30) Priorität: 18.07.1994 DE 4425323
(71) Anmelder: DEGUSSA AG, D-60311 Frankfurt (DE)
(72) Erfinder: Ritzert, Hans-Josef, Dr., D-63505 Langenselbold (DE); Jaeckel, Rüdiger, D-63505 Langenselbold (DE)

(57) **Zusammenfassung**

2.1 Bekannte hinterfütterte Sanitärartikel, die ein tiefgezogenes Acrylglasformteil aufweisen, das an seiner Rückseite mit einer Schicht eines faserhaltigen Polymermaterials verstärkt ist, welches ohne zusätzlichen Haftvermittler mit dem Acrylglasformteil verbunden ist, wurden entweder in einem Gießprozeß mit relativ dicken Schichten (8 mm) verstärkt oder sie sind nur schlecht zu recyclen, weil die Hinterfütterung z. B. ein faserhaltiges Polyesterharz ist, das auf die Rückseite gespritzt wurde.

2.2 Die neuen hinterfütterten Sanitärartikel kennzeichnen sich dadurch, daß die Verstärkungsschicht 1 - 5 mm dick und durch Aushärtung eines auf die Rückseite des Acrylglasformteils aufgesprühten polymerisierbaren, kalthärtbaren, reaktiven (Meth)acrylat-Systems erhältlich ist, dessen Zusammensetzung näher beschrieben wird.

2.3 Bade-, Duschwannen, Spülbecken, jeweils aus Acrylglas.

## Beschreibung

Die Erfindung betrifft hinterfütterte Sanitärartikel gemäß dem Oberbegriff des Anspruchs 1 sowie ein Verfahren zur Herstellung solcher Sanitärartikel gemäß Anspruch 6.

Insbesondere bezieht sich die Erfindung auf Bade- oder Duschwannen bzw. Spülbecken aus tiefgezogenen Acrylglasformteilen, die rückseitig eine Verstärkung aufweisen, welche durch Polymerisation eines (Meth)acrylatsystems erhältlich ist.

Verstärkte Acrylglasformteile als Wannen oder Becken im Sanitärbereich sind grundsätzlich bekannt. So beschreibt die japanische Offenlegungsschrift JP-A 05-237854 der Mitsubishi Rayon ein Herstellungsverfahren, bei dem eine gefüllte Harzmischung in einen Spalt zwischen Formwerkzeug und tiefgezogenen Acrylglasformteil eingefüllt und dann in Kontakt mit dem Formteil befindlich integral ausgehärtet wird. Beispielhaft wird als gefüllte Harzmischung eine Mischung aus 90 Gew.-Teilen eines Prepolymerisats eines methacrylischen Esters und 10 Gew.-Teilen eines Methacrylatmonomeren mit 60 Gew.-% Aluminiumhydroxid verwendet. Diese Mischung wird zusammen mit Initiator und Vernetzer in einen 8 mm starken Spalt zwischen dem vorgeformten Acrylglasteil und dem Formwerkzeug gegossen. Die Mischung im Spalt läßt man dann 4 h lang härten, wobei die Oberfläche des Spalts zwischen der Form und dem Formteil mit einer Polyesterfolie bedeckt wird.

Als Füllstoffe für die einzugießende Harzmischung werden neben Aluminiumhydroxid weiterhin Calciumcarbonat, Glasfasern oder Carbonfasern vorgeschlagen.

Obwohl auf die in der japanischen Offenlegungsschrift vorgeschlagene Weise laminierte Verbundkörper, insbesondere Bade oder Duschwannen oder Abflußbecken, erhältlich sind, die hinsichtlich der Haftung der Verstärkungsschicht mit dem tiefgezogenen Acrylglasformteil sowie der Festigkeit des gesamten Verbundkörpers über durchaus befriedigende Eigenschaften verfügen, so sind sowohl das Formteil als auch das Verfahren zu seiner Herstellung in wenigstens zweierlei Hinsicht besonders nachteilig.

Zum einen ist zur Herstellung des hinterfütterten Formteils immer ein zweites Formwerkzeug nötig, bei dem das zum Gießen der Verstärkungsmasse erforderliche Volumen mit berücksichtigt wird. Zum anderen ist nur eine relativ dicke Hinterfütterung des tiefgezogenen Formteils (im vorgenannten Beispiel 8 mm) möglich, da es beim Gießprozeß leicht zu größeren Dickeunterschieden kommen kann, was bei zu geringen Hinterfütterungsstärken, wie sie aufgrund von Materialverbrauch und Gewichtsersparnis durchaus erstrebenswert wären, nicht mehr tolerierbar ist.

Daher ist es Aufgabe der Erfindung weitere hinterfütterte Sanitärartikel zur Verfügung zu stellen, die bei möglichst hoher Materialersparnis den allgemein hinsichtlich der Stabilität an Sanitärartikeln gestellten Anforderungen genügen. Außerdem soll der neue Sanitärartikel möglichst einfach zu fertigen sein.

Gelöst werden diese und andere nicht näher angegebene Aufgaben durch einen hinterfütterten Sanitärartikel mit den Merkmalen des kennzeichnenden Teils des Anspruches 1. In verfahrensmäßiger Hinsicht geben die Merkmale des Kennzeichens von Anspruch 6 eine Lösung des der Erfindung zugrundeliegenden Problems an. Vorteilhafte Ausführungsformen bzw. Verfahrensvarianten werden in den jeweils auf die unabhängigen Ansprüche zurückbezogenen abhängigen Ansprüchen unter Schutz gestellt.

Die hinterfütterten Sanitärartikel der Erfindung genügen allen von den Norminstituten un den industriellen Verarbeitern bezüglich der physikalischen Eigenschaften des Sanitärartikels aufgestellten Forderungen.

Insbesondere zeigen die erfindungsgemäßen hinterfütterten Formteile eine hohe Festigkeit bei Beanspruchung und zeichnen sich durch eine überragende Dauerhaftigkeit der Verbindung zwischen Hinterfütterungsschicht und Acrylglasformteil aus.

Form und Art des Acrylglasformteils, das erfindungsgemäß hinterfüttert ist, unterliegen keiner besonderen Einschränkung. Es können Formteile aus Acrylglas hinterfüttert sein, die nach allen dem Fachmann zur Formgebung von Acrylglas bekannten Verfahren hergestellt worden sind. Hierzu gehören u. a. Tiefziehen in allen Variationen, Vakuumformung, Vakuumformung ohne Formbegrenzung, Vakuumnegativverfahren, Dropform-Verfahren, Vakuumstreckformverfahren, Tiefziehsaugverfahren u. ä.. Besonders bevorzugt für die Erfindung sind durch Tiefziehen erhältliche Acrylglasformteile.

Bezüglich der Art des Acrylglases besteht ebenfalls keine Limitierung. Alle marktüblichen Acrylgläser sind verwendbar.

Die Acrylglasformteile, die erfindungsgemäß mit einer Hinterfütterungsschicht versehen sind, enthalten bezüglich des Acrylglasformteils neben üblichen Additiven überwiegend Struktureinheiten, die hinsichtlich ihres chemischen Aufbaus der nachfolgenden Formel I gehorchen: 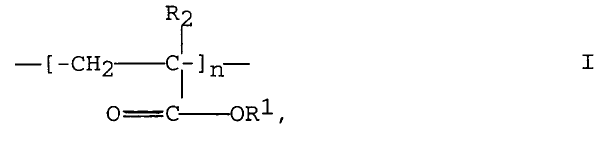
worin
R¹ C₁₋₆-Alkyl, bevorzugt C₁₋₄-Alkyl,
R² H, C₁₋₆-Alkyl, bevorzugt H oder C₁₋₄-Alkyl, ganz besonders bevorzugt H oder CH₃, und
n eine positive ganze Zahl größer 1
sind.

Zu beispielhaften Verbindungen, welche die vorgenannte Struktureinheit aufweisen, gehören Polymethylacrylat, Polyethylacrylat, Polymethylmethacrylat, Polypropylacrylat, Polybutylacrylat, Polypropylmethacrylat, Polybutylmethacrylat und Copolymere, die zwei oder mehrere dieser Polymersorten aufweisen. Die ersten vier Verbindungen sind im Rahmen der Erfindung bevorzugt. Ganz besonders bevorzugt ist Polymethylmethacrylat (PMMA).

Neben den chemischen Mischungen (statistische Copolymere oder auch Blockcopolymere), die durch Copolymerisation von wenigstens zwei substituierten oder unsubstituierten Acrylsäureestermonomeren entstanden sind (z. B. Methylmethacrylat-N-butylmethacrylat-Copolymere), lassen sich im Rahmen der Erfindung auch Acrylglasformteile aus Copolymeren verwenden, die bis zu 50 Gew.-% wenigstens eines weiteren mit wenigstens einem substituierten oder unsubstituierten Acrylsäureestermonomeren copolymerisierbaren vinylisch ungesättigten Monomeren aufweisen. Beispiele hierfür sind u. a. MethylmethacrylatStyrol-Copolymere oder Methylmethacrylat-Butylacrylat-Styrol-Terpolymere.

Auch physikalische Mischungen, sogenannte Blends, sind für die Acrylglasformteile bevorzugt.

Bei den erfindungsgemäßen Wannen und Becken gelingt es dadurch, daß die Verstärkungsschicht lediglich eine Dicke von 1 - 5 mm aufweist, eine hohe Gewichts- und Materialersparnis zu realisieren, womit bei Einhaltung der erforderlichen Festigkeitswerte eine Reduzierung der Stückkosten einhergeht. Verstärkt wird dieser Ersparniseffekt zusätzlich durch die Beschaffenheit der Verstärkungsschicht und die Art der Aufbringung der die Verstärkungsschicht ergebenden Materialien.

Die erfindungsgemäßen verstärkenden Hinterfütterungsschichten sind durch Aushärtung eines polymerisierbaren, kalthärtenden, reaktiven (Meth)acrylat-Systems erhältlich, das sich aus den Komponenten A) bis E) zusammensetzt, die zusammen das Bindemittel darstellen, den Füllstoffen F) und Glasfaserhexel G) sowie einem evtl. Anteil an einem Lösungsmittel H).

Das Bindemittel A) bis E) setzt sich wiederum zusammen aus polymerisierbaren Monomeren A), ggf. in diesem löslichen oder quellbaren (Pre)polymeren B), ggf. Weichmacher C), einem Redoxsystem D) sowie üblichen Additiven E).

Als Monomer A) kann ein einziges Monomer eingesetzt werden, z. B. Methyl(meth)acrylat, üblicherweise wird jedoch ein Gemisch verwendet. Die Zusammensetzung der Komponente A) ist:

| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≧ C₅ (Meth)acrylat | 0 - 50 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-%. |

Vorzugsweise ist Styrol auf max. 20 Gew.-% in A) beschränkt, da ein höherer Gehalt zu Störungen bei der Kalthärtung führt und mit starken Geruchsbelästigungen zu rechnen ist.

Ein in Klammern gesetzter Bestandteil steht für dessen optionale Verwendbarkeit, d. h. (Meth)acrylat steht für Acrylat und/oder Methacrylat. Die Monomerkomponente A) enthält zumindest 30 Gew.-% (Meth)acrylat, wobei einwertige (Meth)acrylate mit einem C₁-C₄-Esterrest bevorzugt sind. Längerkettige Ester, d. h. solche mit einem C₅- oder längerkettigen Esterrest sind auf 50 Gew.-% in der Komponente A) beschränkt. Diese Ester machen die Hinterfütterung der Acrylglasformteile zwar flexibler, aber auch weicher, wodurch ihre Gebrauchseigenschaften eingeschränkt werden. Vorzugsweise sind in der Komponente A) auch mehrwertige (Meth)acrylate enthalten, wobei die Komponente A) auch vollständig aus mehrwertigen (Meth)acrylaten aufgebaut werden kann.

Neben den (Meth)acrylaten kann die Komponente A) auch andere Comonomere enthalten, wobei deren Anteil auf 50 Gew.-% beschränkt ist. Unter diesen Comonomeren können Vinylaromaten und/oder Vinylester zu jeweils bis zu 30 Gew.-% in der Komponente A) enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A) zu 80 - 100 Gew.-% und besonders bevorzugt zu 90 - 100 Gew.-% aus (Meth)acrylaten aufgebaut, da sich mit diesen Monomeren günstige Verarbeitungs- und Gebrauchseigenschaften für die Hinterfütterung erreichen lassen. Der Anteil an C₂-C₄-Estern in (Meth)acrylaten ist vorzugsweise auf 50 Gew.-% in der Komponente A) beschränkt, bevorzugt sind diese Ester zu max. 30 Gew.-% und besonders vorteilhaft zu max. 20 Gew.-% in der Komponente A) enthalten. Ebenso sind die ≧ C₅-Ester der (Meth)acrylsäure vorzugsweise auf 30 Gew.-% und besonders vorteilhaft auf 15 Gew.-% beschränkt. Hierdurch lassen sich besonders flexible Hinterfütterungsschichten herstellen.

Geeignete monofunktionelle (Meth)acrylate sind insbesondere Methylmethacrylat, Butylmethacrylat, Butylacrylat, 2-Ethylhexylacrylat, Ethyltriglykolmethacrylat, Hydroxypropylmethacrylat, als Comonomere eignen sich insbesondere Vinyltoluol, Styrol, Vinylester.

Besonders vorteilhaft sind polyfunktionelle (Meth)acrylate in der Komponente A) enthalten, wobei deren Gehalt üblicherweise im Bereich 1 bis 50 Gew.-% und meist bei 1 bis 10 Gew.-% in A) liegt. Die polyfunktionellen (Meth)acrylate dienen zur Polymerverknüpfung zwischen linearen Molekülen. Dadurch können Eigenschaften wie Flexibilität, Kratzfestigkeit, Glasumwandlungstemperatur, Schmelzpunkt oder Härtungsabläufe beeinflußt werden.

Übliche polyfunktionelle (Meth)acrylate sind Triethylenglykoldimethacrylat (TEDMA), Trimethylolpropantrimethacrylat (TRIM), 1,4-Butandioldimethacrylat (1,4-BDMA), Ethylendimethacrylat (EDMA).

Zur Einstellung der Viskosität des Bindemittels und der gesamten Rheologie des Systems sowie der besseren Durchhärtung kann der Komponente A) ein Polymer oder Prepolymer B) zugegeben werden. Dieses (Pre)polymer soll in A) löslich oder quellbar sein. Auf einen Teil A) werden bis zu 5 Teile des Prepolymers B) eingesetzt. Geeignet sind insbesondere Poly(meth)acrylate, wobei diese als festes Polymerisat in A) gelöst werden können oder wobei ein sogenannter Sirup eingesetzt werden kann, d. h. teilweise polymerisierte Massen entsprechender Monomere. Weiterhin sind geeignet Polyvinylchlorid, Polyvinylacetat, Polystyrol, Epoxydharze, Epoxy(meth)acrylate, ungesättigte Polyester, Polyurethane oder Mischungen hiervon. Diese Polymere bewirken im Bindemittel z. B. spezielle Flexibilitätseigenschaften, Schrumpfregulierung, Stabilisator, Hautbildner oder Verlaufsverbesserer.

Die Hinterfütterungsschichten enthalten bevorzugt 10 - 30 Gew.-%, besonders vorteilhaft 15 -20 Gew.-% eines hochmolekularen Polymers B), z. B. Poly(meth)acrylats, bezogen auf die Summe A) + B).

Weiterhin kann das Bindemittel einen Weichmacher enthalten, wobei auf 10 Teile A) + B) bis zu 7 Teile eines Weichmachers eingesetzt werden können. Üblicherweise ist in der Summe A) bis C) der Weichmacheranteil C) bei 5 - 25 Gew.-% und meist bei 10 - 20 Gew.-%. Der Weichmacher dient z. B. als Aufnehmer für Peroxidkomponenten für spezielle automatische 2-Komponenten Mischverfahren (Phlegmatisierungsmittel), zur Regulierung der Druck- und Biegezugfestigkeiten sowie zur Variierung der Oberflächenspannung.

Geeignete Weichmacher sind z. B. Phthalsäureester, Adipinsäureester, Chlorparaffine, Harnstoffharze, Melaminharze, modifizierte Phenolate, Polyglykolurethane.

Das Bindemittel ( A) bis E) ) kann ferner noch übliche Additive E) enthalten, wie sie in reaktiven (Meth)acrylat-Systemen meist eingesetzt werden. Diese Additive dienen z. B. der Aufhebung der Sauerstoffinhibierung, hierfür sind insbesondere Paraffine zu 0,05 bis 5 Gew.-% im Bindemittel ( A) bis E) ) und/oder Phosphite zu 0,01 bis 1 Gew.-% in A) bis E) sowie auch eine Polymerhautbildung (paraffinfrei) geeignet. Für letzteres können, um eine nicht inhibierte Oberfläche ohne Paraffin zu erzielen, z. B. extrem hochmolekulare Polymere als Additiv, insbesondere bei Alleinverwendung von Methylmethacrylat, verwendet werden.

Schon während der Härtung verdunstet Methylmethacrylat an der Oberfläche und hinterläßt eine klebfreie Oberfläche durch Polymerhautbildung.

Des weiteren können zugesetzt werden Entschäumer, Netzmittel, Thixotropierungsmittel, Inhibitoren, Mattierungsmittel, Bläuungsmittel, UV-Stabilisatoren, Polymerisationskettenregler.

Hiervon sind besonders Thixotropierungsmittel bevorzugt. Diese dienen zur Verbesserung der Lagerstabilität und des Absetzungsverhaltens von Partikeln in den Harzkomponenten.

In bevorzugter Ausführungsform ist der hinterfütterte Sanitärartikel der Erfindung daher dadurch gekennzeichnet, daß das für die Hinterfütterung verwendete Harzsystem bezogen auf die Füllstoffe F) bis zu 0,5 Teile Thixotropiermittel auf 1 Teil der Partikel F) enthält.

Übliche Thixotropiermittel sind z. B. Kieselsäure, z. B. Aerosil®200, Aerosil®300.

Das erfindungsgemäße Bindemittel ( A) bis E) ) ist geeignet zur Kalthärtung, d. h. enthält zur Polymerisation ein Redoxsystem aus einem Beschleuniger und einem peroxydischen Katalysator oder Initiator, wobei diese Komponenten in genügender Menge zur Kalthärtung der Komponente A) zugegeben werden. Es versteht sich, daß entweder das Redoxsystem oder zumindest Teile davon bis zum gewünschten Zeitpunkt der Polymerisation von den polymerisierbaren Substanzen des Bindemittels getrennt zu halten sind. Der Beschleuniger wird üblicherweise in einer Menge von 0,01 bis 5 Gew.-% in A) bis E) eingesetzt, besonders vorteilhaft zu 0,5 bis 1,5 Gew.-%. Als Beschleuniger eignen sich insbesondere Amine und Mercaptane, bevorzugt sind Dimethyl-p-toluidin, Diisopropoxy-p-toluidin, Diethylol-p-toluidin, Dimethylanilin und Glykoldimercaptoacetat. Des weiteren dienen als Beschleuniger organische Metallsalze, die üblicherweise im Bereich 0,001 bis 2 Gew.-% in A) bis E) eingesetzt werden. Geeignet sind z. B. Kobaltnaphthenat, Kupfernaphthenat, Kobaltoleat, Kupferoleat.

Als peroxydischer Katalysator eignen sich insbesondere Dibenzoylperoxid und Dilauroylperoxid. Die Peroxide werden üblicherweise zu 0,1 bis 10 Gew.-% und insbesondere zu 0,5 bis 5 Gew.-% im Bindemittel eingesetzt. Die Peroxide können auch zur einfacheren Dosierung in Weichmacher oder Lösungsmittel, z. B. Aceton oder MEK, gelöst sein. Im Bindemittel können von der Komponente D) schon die Beschleuniger, z. B. Dimethylparatoluidin, enthalten sein, ohne daß eine Polymerisation bei Umgebungstemperatur stattfindet. Durch Zugabe der restlichen Bestandteile der Komponente D) wird die Reaktion gestartet, wobei die Komponente D) üblicherweise so bemessen ist, daß das (Meth)acrylat-System eine Topfzeit im Bereich von 10 min bis 30 min hat. Das erfindungsgemäße (Meth)acrylat-System enthält also nur unmittelbar vor der Anwendung die vollständige Komponente D), bis zum Gebrauch ist die Komponente D) nicht oder nur zum Teil enthalten.

Die bis zum Gebrauch des erfindungsgemäßen Härters D) von den polymerisierbaren Bestandteilen des Bindemittels A) bis E) getrennt zu haltenden Komponenten des Härters D), also insbesondere die peroxidischen Bestandteile, können wie bereits angedeutet bevorzugt in organischen Lösungsmitteln wie beispielsweise Methylethylketon gelagert werden. Als Lösung mit bis zu 20 % Peroxidgehalt in Ketonen und/oder Alkoholen ist die Härterkomponente stabil. Geringe Anteile an Wasser stören nicht. Die organischen Peroxid-Lösungen können dann beim Gebrauch direkt mit den übrigen System-Komponenten ohne vorherige Abtrennung in den auf die peroxidische Komponente bezogenen Mengen eingesetzt werden.

Als erfindungswesentliche Bestandteile enthält das (Meth)acrylat-System die Komponente F), einen oder mehrere unter den Bedingungen der Depolymerisation der (Meth)acrylate inerte(n) Füllstoff(e) mit einer Feinheit ≦ 100 µm und bezogen auf die Summe A) bis F) in einer Menge zu 1 - 70 Gew.-%.

Hierbei werden in Bezug auf die Erfindung unter Füllstoffen, die unter den Bedingungen der Depolymerisation der (Meth)acrylate inert sind, solche Substanzen verstanden, die die Depolymerisation von Acrylatpolymeren nicht wesentlich nachteilig beeinflussen oder gar unmöglich machen.

Acrylatpolymere, vor allem PMMA, zählen zu den wenigen Kunststoffen, die hervorragend für das direkte chemische Recycling geeignet sind. Hierunter ist zu verstehen, daß diese Polymere sich bei bestimmten Temperaturen und Drucken wieder vollständig in die entsprechenden Monomerbausteine zerlegen lassen (Depolymerisation), wenn auf geeignete Weise Wärme zugeführt wird. So werden beispielsweise zur Depolymerisation von Polymethylmethacrylat (PMMA) und Rückgewinnung des dabei anfallenden monomeren Methylmethacrylats (MMA) durch thermische Behandlung von Acrylglas-Abfällen bei Temperaturen > 200 °C, Kondensation der entstehenden Monomer-Brüden und Aufarbeitung der rohen Monomeren in der Literatur und in den Patentschriften verschiedene kontinuierliche und diskontinuierliche Verfahrensweisen beschrieben. Bei dem industriell am häufigsten angewandten Verfahren wird das Polymermaterial in einen teilweise mit Blei gefüllten Kessel gegeben, der von außen beheizt wird. Bei Temperaturen von über 400 °C depolymerisiert das Polymermaterial und die entstehenden Monomerdämpfe gelangen über eine Rohrleitung in einen Kondensator, wo sie zu einem rohen, flüssigen Monomer kondensiert werden. Entsprechende Depolymerisationsverfahren sind beispielsweise aus der DE-OS 21 32 716 bekannt.

Die Füllstoffe F), wie sie nun im Rahmen der Erfindung eingesetzt werden, dürfen keine Stoffe sein oder im Laufe der Depolymerisation Zersetzungsprodukte ergeben, die eine Aufarbeitung des rohen, flüssigen Monomers, das in der Depolymerisation recycliert werden soll, unmöglich machen oder unnötig erschweren. Bevorzugt werden daher solche Füllstoffe, die sich auf der Oberfläche des Metalls als Schlacke sammeln und beispielsweise während des Betriebs des Reaktors mit einem Rechen, Schieber oder dergleichen entfernt werden können. Unter Verwendung erfindungsgemäßer Füllstoffe F) liegt somit ein hinterfütterter Sanitärartikel vor, der vollständig recyclierbar ist.

Als Füllstoffe werden meist mineralische Füllstoffe verwendet. Zu den vorteilhaft einsetzbaren Füllstoffen gehören im Rahmen der Erfindung Aluminiumhydroxid, calcitische Füllstoffe wie etwa Kreide und Marmor, quarzitische Füllstoffe wie Wollastonit, Cristobalit und ähnliche, amorphe Silicate, Flugasche, Siliciumcarbid und/oder Schwerspat.

Für die Erfindung sind hiervon Aluminiumtrihydrat (Aluminiumhydroxid), quarzitische und calcitische Füllstoffe besonders geeignet.

Die Füllstoffe F) werden entweder allein oder in Kombination von mehreren verwendet. Die Menge liegt wie bereits ausgeführt zwischen 1 und 70 Gew.-% bezogen auf die Summe der Komponenten A) bis F) des Bindemittels + Füllstoffe.

Liegt der Anteil an Füllstoffen unterhalb von 1 Gew.-%, so wird u. U. die Exothermie der Polymerisationsreaktion zu hoch, was ein Kühlen erforderlich machen würde. Wird ein höherer Anteil als 70 % Füllstoffe F) verwendet, so kann dies die Misch- und Verarbeitungseigenschaften des Hinterfütterungsmaterials negativ beeinflussen, insbesondere kann eine Mischung mit so hohem Füllstoffanteil nur noch schlecht versprüht oder gepumpt werden. Außerdem kann bei höheren Füllstoffgehalten nicht mehr sichergestellt werden, daß genügend Bindemittel zur Verfügung steht, um eine stabile Beschichtung zu erhalten.

Andererseits ist erfindungsgemäß ein relativ hoher Anteil an Füllstoffen bevorzugt. Es wird aus Kostengründen eine möglichst hohe Menge angestrebt. Bevorzugt sind Füllstoffe F) in einer Menge von 40 - 65 Gew.-%, besonders bevorzugt in einer Menge von 50 - 60 Gew.-%, jeweils bezogen auf die Summe der Komponenten A) - F), enthalten.

Für die Erfindung werden glatte Füllstoffe bevorzugt. Hierunter sind möglichst glatte Oberflächen aufweisende Partikel zu verstehen. Die Partikelgröße der erfindungsgemäßen Füllstoffe beträgt ≦ 100 µm. Die Partikelgröße der Füllstoffe F) wird durch Siebanalyse bestimmt und ist in der angegebenen Größe erforderlich, um die Verarbeitung des Füllstoffs F) + Bindemittel A) - E)-Systems zu gewährleisten. Insbesondere bei Verarbeitung durch Versprühen wird die Größe der Füllstoffpartikel durch das verwendete Düsensystem limitiert. Die Größe der Füllstoffpartikel F) ist jedoch vom Fachmann an die Erfordernisse des Verarbeitungssystems anzupassen.

Hinzu kommt, daß kleine Füllstoffpartikel mit glatter Oberfläche besser von Bindemittel umhüllt sind, weniger zu Aggregation neigen und keine Luftpolster in der Verstärkungsschicht ausbilden.

Weiterhin kann das erfindungsgemäße (Meth)acrylat-System auch ein oder mehrere Lösungsmittel enthalten, deren Anteil in der Summe A) bis E) + H) ≦ 15 Gew.-% und üblicherweise ≦ 10 Gew.-% liegt. Als Lösemittel eignet sich z. B. Aceton, Ethylacetat, Methylethylketon. Die Lösungsmittel dienen insbesondere zur Einstellung der Viskosität des Bindemittels, damit dieses besser mit den Füllstoffen F) und G) vermischt werden kann. Darüber hinaus dienen die Lösemittel ebenfalls zur Erzielung eines flüssigen, pumpbaren Härtersystems, wie es beispielsweise für die Verarbeitung des Harzsystems auf bekannten Faserspritzanlagen notwendig ist.

Als weiteren essentiellen Bestandteil G) weist die Verstärkungsschicht im Rahmen der Erfindung 10 - 50 Gew.-% Glasfasern in Form von Stücken, sogenannten Hexeln, auf. Bevorzugt sind Anteile von 20 - 40 Gew.-%, jeweils bezogen auf die Summe der Komponenten A) bis H). Die Glasfaserstücke dienen zusammen mit den Füllstoffen F) zur Verbesserung der Verstärkungseigenschaften der rückwärtigen Beschichtung des Acrylglasformteils.
Glasfaserabschnitte lassen sich von allen kommerziell erhältlichen Glasfaserrovings gewinnen. Die Hexel haben dabei bevorzugt eine Länge zwischen 3 und 7, besonders bevorzugt zwischen 5 und 6 cm. Zu beachten ist, daß die mechanische Eigenschaft der Verstärkungsschicht um so besser wird, je länger die Fasern sind. Der Durchmesser der Glasfaserhexel ist relativ unkritisch. In Frage kommen Durchmesser von ca. 0,01 mm bis ca. 0,02 mm, ggf. versehen mit Silan-Schlichte.

Die Glasfaserhexel bilden in der fertigen Hinterfütterungsschicht ein Gewirre aus. Sind die Faserabschnitte länger als oben angegeben, so besteht zunehmend die Gefahr, daß sich lange Fasern senkrecht stellen und aus der Oberfläche bürstenartig herausstehen.

Dies kann in gewissem Maße durch nachträgliche Glättung vermieden werden, indem die herausstehenden Faserabschnitte vor der endgültigen Aushärtung des Bindemittels angepreßt und gewalzt werden. Sind die Glasfaserhexel kürzer als ca. 3 cm, so ist ihre Eigenschaft ungenügend, ein befriedigendes Fasergewirr auszubilden. Wenn der Verfilzungseffekt aber fehlt, wird die mechanische Festigkeit der Verstärkung schlechter.

Zur vorliegenden Erfindung gehört auch ein Verfahren zur Herstellung eines hinterfütterten Sanitärartikels, bei dem ein reaktives Harzsystem auf die Rückseite eines Formteils aus Acrylglas aufgesprüht wird, wobei das Harzsystem im Kontakt mit dem Acrylglasformteil aushärtet und sich dabei mit dem Acrylglasformteil verbindet, wobei das Verfahren dadurch gekennzeichnet ist, daß ein überwiegend auf (Meth)acrylaten basierendes Harzsystem verwendet wird, das zu einem Polymer mit einer Glasumwandlungstemperatur Tg > 70 °C aushärtet und bezogen auf 1 Gew.-Teil des Harzsystems bis zu 2,33 Gew.-Teile solcher Füllstoffe aufweisen kann, die unter den Bedingungen der Depolymerisation des Acrylglasformteils inert sind.

Den Stand der Technik hinsichtlich des Verfahrens repräsentieren beispielsweise die DE 36 44 111 A1 oder die FR 2 640 909.

So ist aus der ersten Druckschrift ein Verfahren zur Herstellung einer Kunststoff-verstärkten Badewanne bekannt, bei dem eine Wanne, die im Tiefziehverfahren aus Acrylglas gefertigt wurde, mit einer auf die Außenseite aufgespritzten glasfaserverstärkten Polyesterharzschicht verstärkt wird.

Die FR 2 640 909 betrifft ein Sandwich-Bauteil für den Sanitärbereich aus thermoplastischem Harz (z. B. PMMA) und einer auf die Bauteilform des thermoplastischen Harzteils vorgeformten Glasfasermatte. Verbunden werden diese Teile in einem Formwerkzeug durch Einspritzen einer sirupösen Polyesterformulierung zwischen die vorgeformten Acryl- und Faserteile. Die Möglichkeit der Verwendung eines Acrylharzes wird auch erwähnt.

Demgegenüber wird gemäß dem Verfahren der Erfindung ein auf (Meth)acrylaten basierendes Harzsystem im Sprühverfahren aufgebracht, wobei zusätzlich bei der Auswahl der möglichen Füllstoffe auf deren Unschädlichkeit in der Depolymerisation der Polymerisate geachtet wird. Durch die sorgfältige Abstimmung von Materialauswahl (sowohl Formteil als auch Hinterfütterung basieren auf (Meth)acrylaten, Füllstoffe sind inert) und Aufbringverfahren der Hinterfütterungsschicht wird ein hundertprozentig recyclebares Produkt zugänglich, das gleichzeitig in Folge des Sprühverfahrens besonders materialsparend und einfach herstellbar ist.

Bevorzugt zeichnet sich das Verfahren der Erfindung dadurch aus, daß als Harzsystem ein polymerisierbares, kalthärtbares, reaktives (Meth)acrylat-System verwendet wird, welches
A)

| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≧ C₅ (Meth)acrylat | 0 - 50 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-% |

B) auf 1 Teil A) 0 - 5 Teile eines in A) löslichen oder quellbaren (Pre)polymers
C) auf 10 Teile ( A) + B) ) 0 - 7 Teile eines Weichmachers
D) ein bis zur Polymerisation von den polymerisierbaren Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A)
E) übliche Additive
F)

| | |
|---|---|
| Füllstoffe, bezogen auf die Summe A) - F) | 1 - 70 Gew.-%, |
| wobei die Füllstoffe eine Partikelgröße aufweisen | < 100 µm |

H)

| | |
|---|---|
| Lösungsmittel bezogen auf die Summe A) - E) + H) | ≦ 15 Gew.-% |

enthält.

Um das Absetzverhalten der Füllstoffe F) bei längeren Lagerzeiten vor Gebrauch zu verbessern und damit die Lagerstabilität zu erhöhen, ist es bevorzugt, daß die Füllstoffe F) vor Verwendung des reaktiven Harzsystems mit einem Homogenisierungsaggregat unter Zusatz eines Thixotropiermittels in einer Menge von 0,01 - 0,5 Teile bezogen auf 1 Teil F) in das System aus Bindemittel A) - E) und Lösungsmittel H) eingearbeitet werden.

Durch Verwendung eines geeigneten Homogenisierungsaggregats bei der Herstellung des Harzsystems werden außerdem die Größe und die Form der Füllstoffpartikel positiv beeinflußt.

Die erfindungsgemäßen hinterfütterten Sanitärartikel lassen sich durch Aufsprühen oder -spritzen des Harzsystems A) bis H) auf die Rückseite des Acrylglasformteils herstellen.

Hierbei werden bevorzugt während des Sprühens zwei Materialströme miteinander gemischt, wobei ein erster der Materialströme die polymerisierbaren Bestandteile der Harzmischung und ein zweiter Materialstrom die bis zur Polymerisation von den polymerisierbaren Bestandteilen des Harzsystems getrennt zu haltenden Bestandteile der Komponente D) des Harzsystems aufweist.

Zum Aufsprühen werden bevorzugt bekannte Flächenstrahl-Faserharz-Spritzanlagen verwendet, wie sie aus der Polyesterverarbeitung bekannt sind. Unter Verwendung solcher Anlagen lassen sich insbesondere im Fächerstrahlverfahren Beschichtungen unter gleichzeitiger deutlicher Verminderung der Emissions-Werte aufbringen. Dies kann vorteilhaft mit Sprühpistolen geschehen, die eine individuelle Regelung des verlustfreien Laminatauftrags ermöglichen.

Besonders geeignete Misch- und Zerstäubungsverfahren sind Gegenstand der EP 38 481.

Im Rahmen der Erfindung wird weiterhin bevorzugt während des Sprühens ein dritter Materialstrom im wesentlichen aus gehexelten Glasfasern zugemischt. Kunststoffverarbeitungsanlagen, die das Hexeln eines Rovings zulassen, sind Stand der Technik.

Die Glasfasern werden weiterhin bevorzugt in einem Anteil von 10 - 50 Gew.-Teilen bezogen auf die Summe der 3 Materialströme zugemischt.

Das Verfahren der Erfindung zeichnet sich insbesondere dadurch aus, daß es bei Umgebungstemperatur durchgeführt werden kann, d. h. üblicherweise zwischen 0 und 35 °C, aber auch, sofern gewünscht, bei extremeren Temperaturen wie -10 bis +45 °C.

Das erfindungsgemäße polymerisierbare kalthärtende reaktive (Meth)acrylat-System kann in verschiedenen Vormischungen bereitgestellt werden. Solche Vormischungen können beispielsweise enthalten (alle Angaben in Gewichtsteilen)

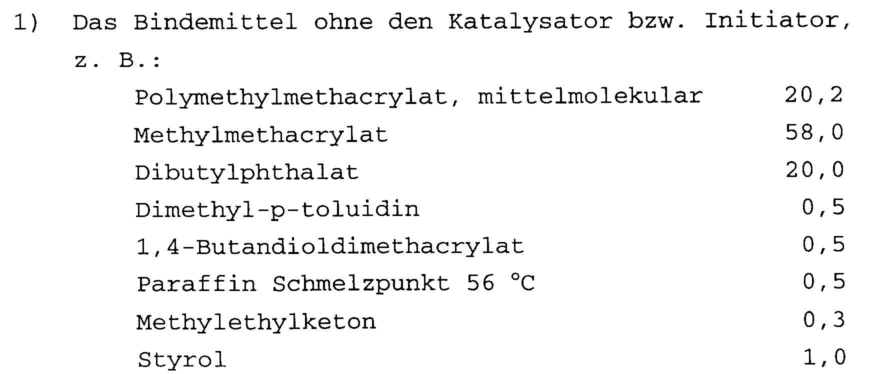

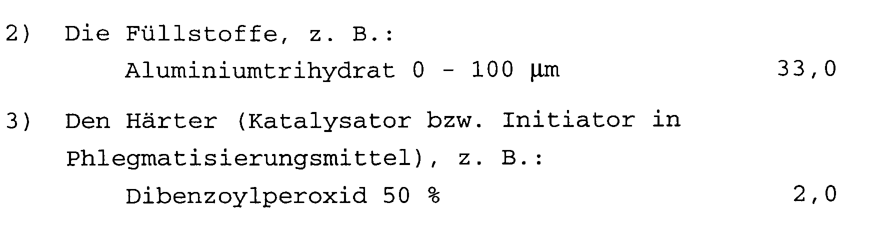

oder

| | | |
|---|---|---|
| 1) | reaktives Methacrylatharz ohne Härter (A - E) | 60,0 |
| 2) | Quarzit 0 - 100 µm | 30,0 |
| | Aluminiumhydroxid 0 - 100 µm | 5,0 |
| 3) | Härter | 2,0 |

oder

| | | |
|---|---|---|
| 1) | reaktives Methacrylatharz (A - E) ohne Härter | 95,0 |
| 2) | Calciumcarbonat 0 - 100 µm | 5,0 |
| 3) | Härter | 2,0 |

oder

| | | |
|---|---|---|
| 1) | reaktives Methacrylatharz (A - E) ohne Härter | 75,0 |
| 2) | Aluminiumhydroxid 0 - 100 µm | 25,0 |
| 3) | Härter | 2,0. |

Diese Vormischungen werden an Ort und Stelle gemischt und unverzüglich verarbeitet, übliche Topfzeiten sind 15 min bei +20 °C.

Im folgenden wird die Erfindung anhand von Ausführungsbeispielen und Vergleichsbeispielen weitergehend erläutert.

### Beispiel 1

33,00 Gew.-Teile eines Bindemittels bestehend aus
20,00 % Polymethylmethacrylat
74,80 % Methylmethacrylat
4,00 % Butandiolmethacrylat
0,70 % Paraffine (Schmelzpunkt <56 °C)
0,50 % Dimethylparatoluidin
werden mit
66,25 Gew.-Teilen Aluminiumhydroxid (0 - 80 µm)
0,75 Gew.-Teilen Aerosil 200
über 4 Stunden verrührt.

Die Mischung weist eine Auslaufzeit nach ISO, 6 mm, von 180 - 200 sec auf.

Diese Mischung wird mit einer Niederdruck-Airless-Fächerstrahl-Glasfaser-Spritzanlage mit Außenmischung vom Typ Glas-Craft LPA3-5/SSA-EX zusammen mit einer Härterflüssigkeit, bestehend aus
82,00 % Methylethylketon
13,00 % Dibenzoylperoxid
5,00 % Dilauroylperoxid
im Volumenverhältnis 100:2 bis 100:4,5 sowie gehexeltes Glasfaserroving (10 µm bis 20 µm, mit Silanschlichte und einer Länge von 0,5 bis 2 Zoll) auf geformtes Acrylglas aufgetragen und durch Laminierrollen entlüftet. Der Faseranteil in der Gesamtmischung beträgt 20 Gew.-%.

Bei Härterdosierung 100:2 beträgt die Aushärtungszeit 50 - 60 min. Bei Härterdosierung 100:4 beträgt die Aushärtungszeit ca. 30 min.

### Beispiel 2

49,50 Gew.-% eines Bindemittels bestehend aus
25,00 % Polymethylmethacrylat
72,00 % Methylmethacrylat
2,00 % Triethylenglykoldimethacrylat
0,50 % Paraffine (Schmelzpunkt <56 °C)
0,50 % Diisopropylolparatoluidin
werden mit
50,00 Gew.-Teilen Calciumcarbonat (0 - 50 µm)
0,50 Gew.-Teilen Aerosil 200
über 4 Stunden verrührt.

Die Mischung weist eine Auslaufzeit nach ISO, 6 mm, von 150 - 170 sec auf.

Diese Mischung wird mit einer Niederdruck-Airless-Fächerstrahl-Glasfaser-Spritzanlage mit Außenmischung vom Typ Glas-Craft LPA3-5/SSA-EX zusammen mit einer Härterflüssigkeit, bestehend aus
80,00 % Methylethylketon
2,00 % Polymethylmethacrylat
13,00 % Dibenzoylperoxid
5,00 % Dilauroylperoxid
im Volumenverhältnis 100:2 bis 100:4,5 sowie gehexeltes Glasfaserroving (10 µm bis 20 µm, mit Silanschlichte und einer Länge von 0,5 bis 2 Zoll) auf geformtes Acrylglas aufgetragen und durch Laminierrollen entlüftet. Der Faseranteil in der Gesamtmischung beträgt 20 Gew.-%.

Bei Härterdosierung 100:2 beträgt die Aushärtungszeit 40 - 50 min Bei Härterdosierung 100:4 beträgt die Aushärtungszeit 20 - 30 min.

### Beispiel 3

Ein nach Beispiel 2 hinterfüttertes Acrylglas ergab eine Haftzugfestigkeit von 8,32 N/mm². Nach 4 Wochen Lagerung in Heißwasser (80 °C) sank die gemessene Haftzugfestigkeit auf 7,28 N/mm².

Ein zu Vergleich min glasfaserverstärkten ungesättigten Polyester hinterfüttertes Acrylglas wies eine Haftzugfestigkeit von 7,82 N/mm² auf. Nach 4 Wochen Lagerung in Heißwasser war eine Haftzugfestigkeit infolge vorzeitiger Ablösung nicht mehr meßbar.

## Patentansprüche

1. Hinterfütterter Sanitärartikel, aufweisend ein tiefgezogenes Acrylglasformteil, das an seiner Rückseite mit einer Schicht eines faserhaltigen Polymermaterials verstärkt ist, welches ohne zusätzliche Haftvermittler fest mit dem Acrylglasformteil verbunden ist,
**dadurch gekennzeichnet,**
daß die Verstärkungsschicht 1 - 5 mm dick ist und durch Aushärtung eines auf die Rückseite des Acrylglasformteils aufgesprühten polymerisierbaren, kalthärtbaren, reaktiven (Meth)acrylat-Systems erhältlich ist,
welches
A)
| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≧ C₅ (Meth)acrylat | 0 - 50 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-% |
B) auf 1 Gew.-Teil A) 0 - 5 Gew.-Teile eines in A) löslichen oder quellbaren (Pre)polymers
C) auf 10 Gew.-Teile ( A) + B) ) 0 - 7 Gew.-Teile eines Weichmachers
D) ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A)
E) übliche Additive
F)
| | |
|---|---|
| unter den Bedingungen der Depolymerisation inerte Füllstoffe bezogen auf die Summe A) - F) mit einer Feinheit ≦ 100 µm | 1 - 70 Gew.-% |
G)
| | |
|---|---|
| bezogen auf die Summe A) - H) Glasfaserhexel | 10 - 50 Gew.-% |
H)
| | |
|---|---|
| Lösungsmittel bezogen auf die Summe A) - E) plus H) | ≦ 15 Gew.-% |
enthält.

2. Sanitärartikel nach Anspruch 1,
**dadurch gekennzeichnet,**
daß die Füllstoffe F) Aluminiumhydroxid, Calciumcarbonat, Kreide, Marmor, Quarzit, Wollastonit und/oder Cristobalit sind.

3. Sanitärartikel nach Anspruch 1 oder 2,
**dadurch gekennzeichnet,**
daß die Füllstoffe F) in einer Menge von 40 - 65 Gew.-%, bevorzugt 50 - 60 Gew.-% bezogen auf die Summe A) - F) enthalten sind.

4. Sanitärartikel nach einem der vorhergehenden Ansprüche,
**dadurch gekennzeichnet,**
daß bezogen auf 1 Gew.-Teil F) bis 0,5 Teile Thixotropiermittel enthält.

5. Sanitärartikel nach einem der vorhergehenden Ansprüche,
**dadurch gekennzeichnet,**
daß die Glasfaserhexel H) in einer Menge von 20 - 40 Gew.-% enthalten sind.

6. Verfahren zur Herstellung eines hinterfütterten Sanitärartikels,
bei dem ein reaktives Harzsystem auf die Rückseite eines Formteils aus Acrylglas aufgesprüht wird, wobei das Harzsystem im Kontakt mit dem Acrylglasformteil aushärtet und sich dabei mit dem Acrylglasformteil verbindet,
**dadurch gekennzeichnet,**
daß ein überwiegend auf (Meth)acrylaten basierendes Harzsystem verwendet wird, das zu einem Polymer mit einer Glasumwandlungstemperatur Tg > 70 °C aushärtet und bezogen auf 1 Gew.-Teil des Harzsystems bis zu 2,33 Gew.-Teile solcher Füllstoffe aufweisen kann, die unter den Bedingungen der Depolymerisation des Acrylglasformteils inert sind.

7. Verfahren nach Anspruch 6,
**dadurch gekennzeichnet,**
daß als Harzsystem ein polymerisierbares, kalthärtbares, reaktives (Meth)acrylat-System verwendet wird, welches
A)
| | |
|---|---|
| (Meth)acrylat | 30 - 100 Gew.-% |
| Methyl(meth)acrylat | 0 - 100 Gew.-% |
| C₂-C₄ (Meth)acrylat | 0 - 100 Gew.-% |
| ≧ C₅ (Meth)acrylat | 0 - 50 Gew.-% |
| mehrwertige (Meth)acrylate | 0 - 50 Gew.-% |
| Comonomere | 0 - 50 Gew.-% |
| Vinylaromaten | 0 - 30 Gew.-% |
| Vinylester | 0 - 30 Gew.-% |
B) auf 1 Teil A) 0 - 5 Teile eines in A) löslichen oder quellbaren (Pre)polymers
C) auf 10 Teile ( A) + B) ) 0 - 7 Teile eines Weichmachers
D) ein bis zur Polymerisation von den polymerisierbaren Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A)
E) übliche Additive
F)
| | |
|---|---|
| Füllstoffe, bezogen auf die Summe A) - F) | 1 - 70 Gew.-%, |
| wobei die Füllstoffe eine Partikelgröße aufweisen | < 100 µm |
H)
| | |
|---|---|
| Lösungsmittel bezogen auf die Summe A) - E) + H) | ≦ 15 Gew.-% |
enthält.

8. Verfahren nach Anspruch 7,
**dadurch gekennzeichnet,**
daß die Füllstoffe F) vor Verwendung des reaktiven Harzsystems mit einem Homogenisierungsaggregat unter Zusatz eines Thixotropiermittels in einer Menge von 0,01 - 0,5 Teile bezogen auf 1 Teil F) in das System aus Bindemittel A) - E) und Lösungsmittel H) eingearbeitet werden.

9. Verfahren nach einem der Ansprüche 6 - 8,
**dadurch gekennzeichnet,**
daß als Füllstoffe F)
Aluminiumhydroxid, Calciumcarbonate wie Kreide oder Marmor, Schwerspat und/oder Quarzite wie Wollastonit, Cristobalit, amorphe Silicate und/oder Flugasche verwendet werden.

10. Verfahren nach einem der Ansprüche 6 - 9,
**dadurch gekennzeichnet,**
daß das Harzsystem auf die Rückseite des Acrylglasformteils aufgesprüht wird, wobei während des Sprühens zwei Materialströme miteinander gemischt werden und wobei ein erster der Materialströme die polymerisierbaren Bestandteile der Harzmischung und ein zweiter Materialstrom die bis zur Polymerisation von den polymerisierbaren Bestandteilen des Harzsystems getrennt zu haltenden Bestandteile der Komponente D) des Harzsystems aufweist.

11. Verfahren nach Anspruch 10,
**dadurch gekennzeichnet,**
daß während des Sprühens ein dritter Materialstrom im wesentlichen aus gehexelten Glasfasern zugemischt wird.

12. Verfahren nach Anspruch 11,
**dadurch gekennzeichnet,**
daß die Glasfasern in einem Anteil von 10 - 50 Gew.-Teilen bezogen auf die Summe der 3 Materialströme zugemischt werden.
